# EUROPÄISCHE PATENTSCHRIFT

(11) **EP 4 271 853 B1**
(45) Veröffentlichungstag und Bekanntmachung des Hinweises auf die Patenterteilung: **25.12.2024**
(21) Anmeldenummer: 22708380.5
(22) Anmeldetag: 31.01.2022
(51) Int. Cl.: C25B 1/04, C25B 15/021, C25B 15/08

(54) **VERFAHREN ZUM BETREIBEN EINER ELEKTROLYSEANLAGE**
METHOD FOR OPERATING AN ELECTROLYSIS SYSTEM
PROCÉDÉ POUR LE FONCTIONNEMENT D'UN SYSTÈME D'ÉLECTROLYSE

(30) Priorität: 17.03.2021 DE 102021202576
(43) Veröffentlichungstag der Anmeldung: 08.11.2023
(73) Patentinhaber: Siemens Energy Global GmbH & Co. KG, 81739 München (DE)
(72) Erfinder: WALL, Dirk, 45473 Mülheim (DE)
(86) Internationale Anmeldenummer: PCT/EP2022/052165
(87) Internationale Veröffentlichungsnummer: WO 2022/194436

(56) Entgegenhaltungen:
- WO-A1-2013/113631
- CH-A- 137 203
- DE-A1- 102011 116 699
- US-A1- 2006 053 792

## Beschreibung

Die Erfindung betrifft eine Elektrolyseanlage mit einem Elektrolyseur zur Erzeugung von Wasserstoff mit Hilfe von elektrischem Strom, wobei eine Kühleinrichtung mit einem mit einem Kühlkreislauf eingesetzt wird, um die beim Prozess im Elektrolyseur entstehende Abwärme abführen zu können.

Elektrolyseanlagen sind aus dem Stand in verschiedenen Ausführungsformen bekannt. Zentraler Baustein in der Elektrolyseanlage ist der Elektrolyseur, wobei in der Regel entweder ein sogenannter Alkalischer Elektrolyseur oder ein sogenannter PEM-Elektrolyseur zum Einsatz kommt. In beiden Fällen ist es notwendig, dass dem Elektrolyseur für die Elektrolyse ein nach Möglichkeit nichtleitendes reines Wasser zugeführt wird. Hierzu wird in aller Regel eine Wasseraufbereitung mit einer De-Ionisierung eingesetzt. Zwangläufig entsteht bei der De-Ionisierung ein stärker belastetes Ionen-haltiges Abwasser, welches auch als solches "Abwasser" abgeführt wird.

Im Prozess der Elektrolyse entsteht eine Abwärme, wozu in aller Regel wiederum der Elektrolyseur von einem Kühlmittel durchströmt wird. Dieses Kühlmittel wird in einer Kühleinrichtung zurückgekühlt.

Bei größeren Anlagen entsteht eine nennenswerte Abwärme, so dass eine Forderung nach einer hinreichenden Kühlleistung der Kühleinrichtung besteht.

Zur Lösung dieses Problems werden beispielsweise elektrisch betriebene Lüfter eingesetzt, um so eine Konvektion zu unterstützen. Nachteilig hierbei ist jedoch der zusätzlich zur Elektrolyse entstehende Stromverbrauch. Weiterhin begrenzt die Umgebungstemperatur die erreichbare Temperatur des Kühlmittels, was insbesondere in Gegenden mit für gewöhnlich hohen Außentemperaturen ein Problem darstellen kann.

Eine vorteilhafte Ausnutzung der bei der Elektrolyse anfallenden Wärme ist in der WO 2013/113631 A1 beschrieben. Dabei ist vorgesehen, dass die Abwärme aus dem Elektrolyseur unmittelbar einer Wasseraufbereitung zugeführt wird. Hierdurch wird mit der Abwärme ein zugeführtes Rohwasser aufgeheizt, um die De-Ionisierung zu unterstützen. Je nach örtlicher Gegebenheit ist es vor Vorteil oder von Nachteil, dass bei dieser Lösung der hohe Wasserverbrauch. Insofern kann diese Lösung zur sinnvoll eingesetzt werden, wenn das zusätzliche Wasser einer anderen Verwendung zugeführt werden kann. CH 137 203 A offenbart das Abwasser unten wegzuführen und nur rein destilliertes Wasser in die geschlossene Kühlung zu führen.

In alternativen Ausführungen wird bevorzugt eine Verdunstungskühlung eingesetzt, wodurch ohne großen Energieeinsatz eine hohe Kühlleistung erreicht werden kann. Insbesondere ist es somit möglich das Kühlmittel bis unterhalb der Umgebungstemperatur abzukühlen. Naheliegend bedarf es hierbei einer Wasserzufuhr zur Ermöglichung der Nasskühlung.

Der Einsatz von Elektrolyseanlagen bietet sich insbesondere an, wenn mit regenerativen Energiequellen und hier insbesondere mittels Photovoltaik erzeugter Strom genutzt werden kann. Entsprechend werden größer dimensionierte Elektrolyseanlagen insbesondere in Gebieten mit hoher Sonneneinstrahlung eingesetzt. Dies ist häufig mit hohen Umgebungstemperaturen und geringer Verfügbarkeit von Wasser verbunden. Damit ist das Problem verbunden, dass eine Konvektionskühlung eine hohe Verlustleistung durch die eingesetzten Lüfter verursacht. Weiterhin ist eine gewünschte niedrige Temperatur des Kühlmittels mitunter mit der Konvektionskühlung nicht erreichbar. Daher wird in der Regel eine Verdunstungskühlung eingesetzt, die jedoch das Problem der Wasserknappheit verstärkt und hohe Wasserkosten verursacht.

Aufgabe der vorliegenden Erfindung ist es, die Ausbeute an Wasserstoff im Verhältnis zu den Kosten zu verbessern.

Ein erfindungsgemäßes Verfahren zum Betreiben einer Elektrolyseanlage mit verbesserter Effektivität ist im Anspruch 1 angegeben. Vorteilhafte Ausführungsformen sind Gegenstand der Unteransprüche.

Die gattungsgemäße Elektrolyseanlage umfasst als Wesentliches Element einen Elektrolyseur, in dem unter Einsatz von elektrischer Energie im Betrieb der Elektrolyseanlage aus Wasser Wasserstoff und Sauerstoff erzeugt wird.

Hierzu bedarf es als erstes einer Wasserversorgung, welche Brauchwasser bereitstellt. Da hohe Anforderungen an die Reinheit und eine minimale Leitfähigkeit gestellt werden, ist als weiters eine Wasseraufbereitung erforderlich. Entsprechend ist diese mit der Wasserversorgung verbunden, so dass im Betrieb der Elektrolyseanlage Brauchwasser zur Wasseraufbereitung gefördert wird. In der Wasseraufbereitung wird das Brauchwasser gegebenenfalls gereinigt und in jedem Fall deionisiert. Entsprechend wird ein deionisiertes Reinstwasser - im folgenden Deionat genannt - erzeugt.

Hierbei ist darauf hinzuweisen, dass das Deionat nicht zwingend reines H2O ist. Vielmehr weist das Deionat diejenige Wasserqualität auf, welche für den Einsatz in der Elektrolyse die notwendigen Anforderungen an Reinheit und insbesondere an eine möglichst geringe Anwesenheit von leitenden Ionen aufweist.

Im Prozess der De-Ionisierung und somit der Abscheidung von Ionen aus dem Brauchwasser fällt zwangsläufig ein Ionen-haltiges Abwasser an.

Die Wasseraufbereitung ist naheliegend mit dem Elektrolyseur verbunden, wobei das Deionat im Betrieb der Elektrolyseanlage dem Elektrolyseur zugeführt wird.

Weiterhin weist die gattungsgemäße Elektrolyseanlage ein Kühleinrichtung auf. Im Betrieb der Elektrolyseanlage erzeugt der Elektrolyseur Abwärme, welche abgeführt werden muss. Hierzu wird der Elektrolyseur mit der Kühleinrichtung derart verbunden, sodass die im Elektrolyseur entstehende Abwärme von der Kühleinrichtung abgeführt werden kann.

Erfindungsgemäß ist nunmehr vorgesehen, dass auch die Wasseraufbereitung mit der Kühleinrichtung verbunden ist, wobei das in der Wasseraufbereitung anfallende Ionen-haltige Abwasser der Kühleinrichtung zu Kühlzwecken zugeführt wird.

Bisher wurde es grundsätzlich als unzulässig abgelehnt das in der Wasseraufbereitung anfallende Ionen-haltige Abwasser innerhalb der Elektrolyseanlage weiter zu verwenden, da die Qualität als vollkommen unzulänglich gilt.

Demgegenüber wird für die erfindungsgemäße Lösung jedoch das Ionen-haltige Abwasser für die Kühlung verwendet. Hierdurch kann der Wasserverbrauch der Elektrolyseanlage reduziert werden, so dass sich insbesondere in Gegenden mit kritischer Wasserversorgung die Akzeptanz für ein Elektrolyseanlage verbessert und sich naheliegend die Kosten für die Wasserversorgung verringern.

Zur Kühlung wird vorteilhaft ein Kühlkreislauf verwendet, der den Elektrolyseur mit der Kühleinrichtung verbindet. Dabei wird dem Elektrolyseur ein gekühltes Kühlmittel zugeführt, welches sich durch den Betrieb des Elektrolyseurs erhitzt. Das erhitzte Kühlmittel wird im Kreislauf der Kühleinrichtung zugeführt. Nachdem es dort wieder abgekühlt wurde, wird dieses wieder zum Elektrolyseur geleitet.

Im Verfahren zum Betrieb der Elektrolyseanlage ist es dabei besonders vorteilhaft, wenn die höhere Belastung durch das Ionen-haltige Abwasser berücksichtigt wird. Hierzu wird vorteilhaft das Wartungsintervall um zumindest 20% ausgehend von einem Vergleichszeitraum verkürzt. Der Vergleichszeitraum ist dabei dasjenige theoretische Wartungsintervall, welches angemessen ist, wenn anstelle des Ionen-haltigen Abwassers bei gleicher vorliegender Anlagentechnik unmittelbar das Brauchwasser für die Kühlung verwendet wird.

Es kann vorgesehen sein, dass weiter Maßnahmen zur Verlängerung des Wartungsintervalls getroffen werden, welche nicht vorgenommen worden wären, wenn direkt Brauchwasser verwendet worden wäre. Gleichwohl wird in diesem Fall für die Bestimmung des Vergleichszeitraums diejenige Anlage mit den weiteren Maßnahmen herangezogen.

Die Verkürzung des Wartungsintervalls führt zwar zu höheren Kosten und gegebenenfalls zu häufigeren Stillstandszeiten - oder im Ergebnis zu höheren Installationskosten und laufenden Kosten bei Ausgleich durch weitere Maßnahmen, jedoch haben die höheren Wartungskosten in Gegenden mit knappen Wasserressourcen eine geringere Bedeutung als der ansonsten erforderliche Wasserverbrauch.

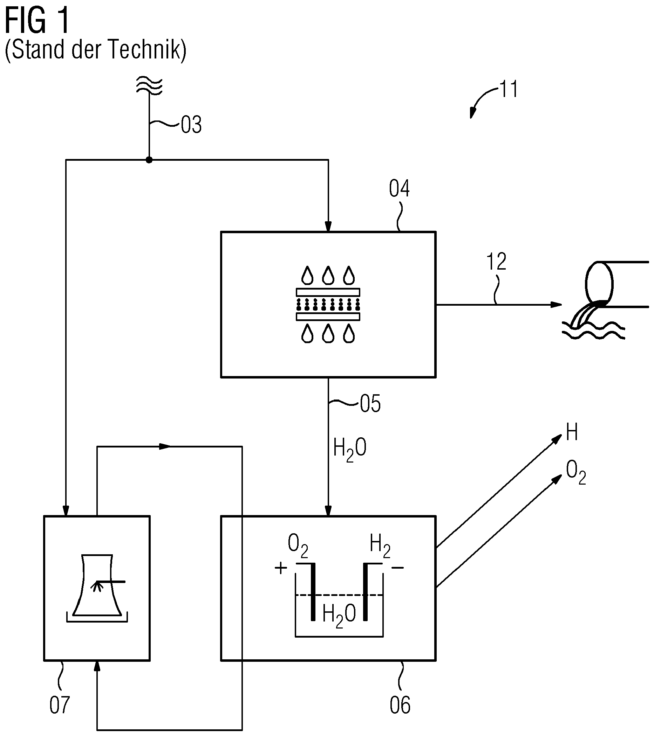

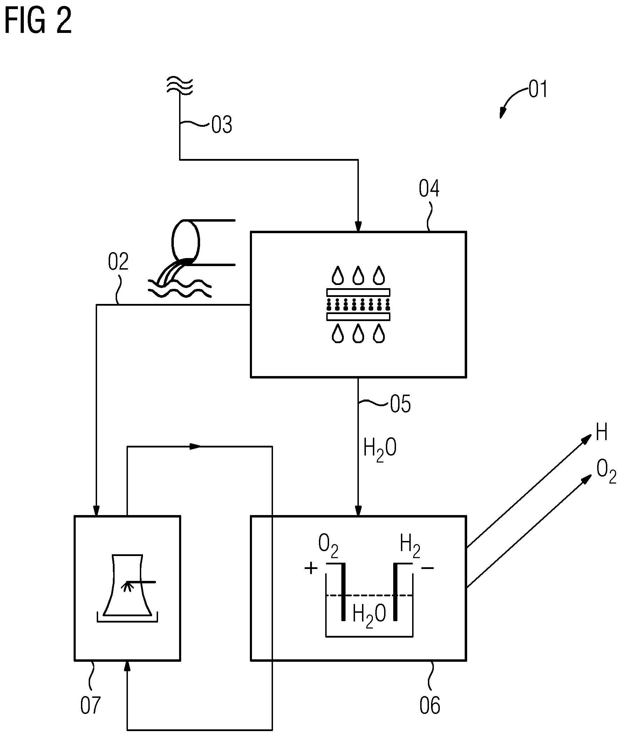

In den nachfolgenden Figuren wird schematisch eine Ausführung einer Elektrolyseanlage nach dem Stand der Technik - siehe Fig. 1 - sowie eine erfindungsgemäße Elektrolyseanlage - siehe Fig. 2 - skizziert.

Beide Ausführungen einer Elektrolyseanlage 11 nach dem Stand der Technik - Fig. 1 - und einer erfindungsgemäßen Elektrolyseanlage 01 umfassen als wesentliches Element den Elektrolyseur 06. Hier wird unter Verwendung von elektrischem Strom das Edukt Wasser H₂O in die Produkte Wasserstoff H2 und Sauerstoff O₂ aufgespalten. Naheliegend ist für diesen Prozess Wasser - d.h. das Deionat - erforderlich.

Hierzu skizzieren die Figuren Versorgung mit Brauchwasser 03, die zu einer Wasseraufbereitung 04 führt. In dieser 04 wird das Brauchwasser 03 gegebenenfalls gereinigt und in jedem Fall deionisiert. Hierdurch wird ein Deionat 05 bereitgestellt, welches 05 dem Elektrolyseur 06 zugeführt wird.

Durch den Prozess der Elektrolyse entsteht Abwärme, welche abgeführt werden muss. Hierzu ist der Elektrolyseur 06 über einen Kühlkreislauf mit einer Kühleinrichtung 07 verbunden. In dieser 07 wird ein zuvor im Elektrolyseur 06 erhitztes Kühlmittel wieder abgekühlt.

Bei der Wasseraufbereitung entsteht zwangläufig ein Ionen-haltiges Abwasser 02, 12.

Hierbei ist - wie die Fig. 1 skizziert - standardmäßig vorgesehen, dass das Abwasser 12 aus der Elektrolyseanlage 11 abgeführt wird. Jedoch ist es für eine wirkungsvolle Kühlung insbesondere in heißen Gegenden notwendig der Kühleinrichtung 07 Wasser, insbesondere für eine Verdunstungskühlung, zuzuführen. Hierzu ist üblicherweise die Kühleinrichtung 07 mit der Wasserversorgung verbunden, so dass der Kühleinrichtung 07 Brauchwasser 03 zugeführt wird.

Demgegenüber ist erfindungsgemäß - wie in Fig. 2 skizziert - nunmehr vorgesehen, dass das Ionen-haltige Abwasser 02 aus der Wasseraufbereitung zur Kühleinrichtung 07 zugeführt wird.

Hierbei wird es in der Regel notwendig werden, die Wartungsintervalle zu verkürzen, jedoch kann hierdurch der Wasserverbrauch reduziert werden.

## Patentansprüche

1. Verfahren zur Erzeugung von Wasserstoff mit einer Elektrolyseanlage (0)
wobei
- in einem Elektrolyseur (06) unter Einsatz von elektrischer Energie aus einem Deionat (05) Wasserstoff und Sauerstoff erzeugt wird, und hierzu
- von einer Wasserversorgung Brauchwasser (03) einer Wasseraufbereitung (04) zugeführt wird,
- das Brauchwasser (03) in der Wasseraufbereitung (04) gereinigt und deionisiert wird, wobei das Deionat (05) erzeugt wird und ein Ionen-haltiges Abwasser (02) anfällt,
- das Deionat (05) dem Elektrolyseur (06) zugeführt wird und zugleich
- das Ionen-haltige Abwasser (02) aus der Wasseraufbereitung (04) ausgeleitet und einer Kühleinrichtung (07) zugeführt wird,
und wobei
- im Elektrolyseur (06) entstehende Abwärme mittels der Kühleinrichtung (07) abgeführt wird.

2. Verfahren nach Anspruch 1,
wobei ein Kühlmittel im Kreislauf fließend im Elektrolyseur (06) erhitzt und in der Kühleinrichtung (07) abgekühlt wird.

3. Verfahren nach Anspruch 1 oder 2,
wobei die Kühleinrichtung (07) eine Verdunstungskühlung umfasst.

4. Verfahren nach einer der Ansprüche 1 bis 3,
wobei in der Kühleinrichtung (07) in regelmäßigen Wartungsintervallen Ablagerungen entfernt werden, wobei der Wartungsintervall um zumindest 20% der Dauer eines Vergleichszeitraums gekürzt ist, wobei der Vergleichszeitraum dasjenige Intervall ist nach dem Ablagerungen entfernt werden wenn ausschließlich Brauchwasser (03) der Kühleinrichtung (07) zugeführt wird.

## Claims

1. Method for producing hydrogen using an electrolysis system (0)
wherein
- hydrogen and oxygen are produced in an electrolyser (06) from deionized water (05) using electrical energy, and for this purpose
- service water (03) is supplied to a water treatment (04) by a water supply,
- the service water (03) is purified and deionized in the water treatment (04), wherein the deionized water (05) is produced and ion-containing wastewater (02) arises,
- the deionized water (05) is supplied to the electrolyser (06) and at the same time
- the ion-containing wastewater (02) is conducted out of the water treatment (04) and supplied to a cooling device (07),
and wherein
- waste heat arising in the electrolyser (06) is dissipated by means of the cooling device (07).

2. Method according to Claim 1,
wherein a coolant flowing in the circuit is heated in the electrolyser (06) and cooled in the cooling device (07).

3. Method according to Claim 1 or 2,
wherein the cooling device (07) comprises evaporative cooling.

4. Method according to any one of Claims 1 to 3,
wherein deposits are removed in the cooling device (07) at regular maintenance intervals, wherein the maintenance interval is shortened by at least 20% of the duration of a comparison period of time, wherein the comparison period of time is that interval after which deposits are removed if exclusively service water (03) is supplied to the cooling device (07).

## Revendications

1. Procédé de production d'hydrogène avec une installation (0) d'électrolyse,
dans lequel
- dans un électrolyseur (06), on produit de l'hydrogène et de l'oxygène à partir d'une eau (05) déminéralisée en utilisant de l'énergie électrique, et à cet effet
- on envoie de l'eau (03) industrielle d'une alimentation d'eau à un traitement (04) de l'eau,
- on épure et on déminéralise l'eau (03) industrielle dans le traitement (04) de l'eau, l'eau (05) déminéralisée étant produite et une eau (02) résiduelle contenant des ions se produisant,
- on envoie l'eau (05) déminéralisée à l'électrolyseur (06) et en même temps
- on fait sortir l'eau (02) résiduelle contenant des ions du traitement (04) de l'eau et on l'envoie à un dispositif (07) de refroidissement,
et dans lequel
- on évacue de la chaleur perdue se créant dans l'électrolyseur (06) au moyen du dispositif (07) de refroidissement.

2. Procédé suivant la revendication 1,
dans lequel on chauffe un fluide réfrigérant passant en circuit dans l'électrolyseur (06) et on le refroidit dans le dispositif (07) de refroidissement.

3. Procédé suivant la revendication 1 ou 2,
dans lequel le dispositif (07) de refroidissement comprend un refroidissement avec évaporation.

4. Procédé suivant l'une des revendications 1 à 3,
dans lequel on retire des dépôts à des intervalles d'entretien réguliers dans le dispositif (07) de refroidissement, l'intervalle d'entretien étant écourté d'au moins 20 % de la durée d'un laps de temps de comparaison, dans lequel le laps de temps de comparaison est l'intervalle après lequel des dépôts sont retirés, lorsque l'on envoie au dispositif (07) de refroidissement exclusivement de l'eau (03) industrielle.
